# EUROPÄISCHE PATENTANMELDUNG

(11) **EP 2 584 284 A2**
(43) Veröffentlichungstag der Anmeldung: **24.04.2013**
(21) Anmeldenummer: 12188834.1
(22) Anmeldetag: 17.10.2012
(51) Int. Cl.: F24J 2/52, F24J 2/46

(54) **Modulares PV-Modul-Trägersystem, Verfahren zum Herstellen einer Modulplatte und Verfahren zum Erzeugen einer dichten PV-Modul-Trägerhülle zwecks Dachsanierung**

(30) Priorität: 19.10.2011 DE 102011116733
(71) Anmelder: Creotecc GmbH, 79111 Freiburg (DE)
(72) Erfinder: Walz, Leo, 79117 Freiburg (DE)
(74) Vertreter: Witte, Weller & Partner

(57) **Zusammenfassung**

Es wird offenbart, eine Modulplatte (10) zur direkten oder indirekten Aufständerung eines PV-Moduls auf einem Dach mit einem plattenförmigen, im Wesentlichen ebenen Grundkörper (12), der eine Oberseite (14) und eine Unterseite (16) aufweist, die über eine umfänglich umlaufenden Randkante (18) miteinander verbunden sind, wobei eine Vielzahl von Verbindungsnasen (22) vorgesehen ist, die aus der Oberseite (14) vorstehen und die in einem umfänglich umlaufenden Randbereich (20) des Grundkörpers (12) verteilt angeordnet sind, wobei ferner eine Vielzahl von Verbindungsaufnahmen (24) vorgesehen ist, die in dem Randbereich (20) des Grundkörpers (12) angeordnet sind und die Vertiefungen in der Unterseite (16) bilden, wobei die Verbindungsaufnahmen (24) und die Verbindungsnasen (22) jeweils eine Kontur und Höhe aufweisen sowie derart relativ zum Grundkörper (12) angeordnet sind, dass benachbarte Modulplatten (10) miteinander verbindbar sind, indem die Verbindungsnasen (22) einer Modulplatte (10-1) formschlüssig in entsprechende Verbindungsaufnahmen (24) mindestens einer anderen Modulplatte (10-2) eingreifen.

## Beschreibung

Die vorliegende Erfindung betrifft eine Modulplatte eines Modulplatten-Verbunds zur direkten oder indirekten Aufständerung eines oder mehrerer Photovoltaikmodule (nachfolgend auch kurz "PV-Modul" genannt) auf einem (Flach-)Dach sowie einen Modulplatten-Verbund. Des Weiteren betrifft die Erfindung ein Verfahren zum Herstellen eines flächendeckenden Modulplatten-Verbunds sowie ein Verfahren zum Herstellen einer Modulplatte.

In dem europäischen Patent EP 0 857 926 B1 wird eine Wanne offenbart, die eine Öffnungsebene aufweist, die gegenüber einer Fläche, auf der die Wanne aufgestellt wird, geneigt ist. Die Neigung wird benötigt, um PV-Module, die auf die Wannenöffnung aufgelegt werden und die mit der Wanne verbunden werden, gegenüber einer Unterkonstruktion, wie z.B. einem Flachdach, in einem bevorzugten Neigungswinkel (z.B. 10° bis 25° gegenüber der Horizontalen) zwecks optimaler Sonneneinstrahlung aufzustellen. Bevor das PV-Modul auf der Öffnung montiert wird, kann die Wanne beschwert werden, indem z.B. Kieselsteine hinein eingeschüttet werden. Im Bodenbereich der Wanne sind Öffnungen vorgesehen, um eine Drainage zu ermöglichen. Die Beschwerung durch die Steine wird benötigt, um zu verhindern, dass Wind, der über die PV-Module streicht, die Gesamtkonstruktion vom Dach hebt.

In der europäischen Patentanmeldung EP 2 040 014 A2 wird ein stapelbares Flachdach-Bodengestell für PV-Module offenbart. Das Gestell weist eine Bodenplatte auf, aus der zwei Auflagevorsprünge hervorstehen, die eine schräge Auflagefläche für die PV-Module definieren. Die Bodenplatte weist eine wellige Oberfläche auf, um (Regen-)Wasser sicher abzuführen. Die welligen Bodenplatten weisen Rillen auf, die als Ablaufkanäle für das Regenwasser dienen. Der gewellte Bodenbereich hat den weiteren Vorteil, dass das Gestell besonders einfach und sicher mit Kies oder anderen groben bzw. körnigen Materialien beschwert werden kann. Die Rillen können so ausgebildet sein, dass zwei benachbarte Bodengestelle in ihren Randbereichen überlappend aufeinander gesteckt werden können, um einen Verbund zu bilden. Das Bodengestell wird vorzugsweise aus HDPE oder recyceltem HDPE hergestellt. HDPE ist ein Kunststoff, der unterhalb von 80 °C erweicht und schwach verzweigte Polymerketten hoher Dichte aufweist. Ergänzend können auf der Unterseite des Bodengestells Dornen angeordnet sein, um eine sichere Verankerung des Bodengestells auf einem Dach zu gewährleisten.

Ein ähnliches Gestell ist in der WO 2009/077030 A1 offenbart, das zur Ausbildung von Modulreihen (Fig. 1C) ausgelegt ist.

Ein Nachteil von herkömmlichem Aufständersystem bzw. Bodengestellen ist, dass die darunterliegende Unterkonstruktion (Dach, Flachdach, etc.) nicht wasserdicht abgedichtet ist. Gerade bei Flachdächern höheren Alters stellt sich häufig das Problem einer Wasserundichtigkeit. Derartige Undichtigkeiten resultieren meistens in einer Komplettsanierung des Dachs. Eine Dachsanierung ist arbeitsaufwändig und teuer.

Daher ist es wünschenswert, ein PV-Modul-Aufständersystem zu haben, das eine Sanierung eines Dachs überflüssig macht und gleichzeitig die Montage von PV-Modulen in einer gewünschten Neigung ermöglicht. Ferner ist es wünschenswert, ein Verfahren bereitzustellen, mit dem ein sanierungsbedürftiges Dach mit einer wasserdichten Hülle eingekleidet werden kann, die gleichzeitig eine Montage eines PV-Modul-Aufständerungssystems darauf ermöglicht.

Diese Aufgabe wird durch eine Modulplatte gelöst zur Bildung eines mehrere Modulplatten aufweisenden wasserdichten Modulplattenverbunds, der zur direkten oder indirekten Aufständerung eines PV-Moduls auf einem Dach geeignet ist, wobei jede Modulplatte einen plattenförmigen, im Wesentlichen ebenen Grundkörper aus Kunststoff aufweist, der eine Oberseite und eine Unterseite aufweist, die über eine umfänglich umlaufenden Randkante miteinander verbunden sind, wobei ein die Randkante (18) aufweisender Randbereich (20) des Grundkörpers umlaufend Überlappungsstöße aufweist, die so ausgebildet sind, dass benachbarte Modulplatten (10) im Modulplattenverbund überlappend und formschlüssig derart aneinander ausrichtbar sind, dass ein Spalt (S) zwischen der Modulplatte und den benachbarten Modulplatten mit einem Lösungskleber auffüllbar ist, der eine stoffschlüssige Verbindung der benachbarten Modulplatten bewirkt.

Vorzugsweise ist eine Vielzahl von Verbindungsnasen vorgesehen, die aus der Oberseite vorstehen und die in einem umfänglich umlaufenden Randbereich des Grundkörpers verteilt angeordnet sind, wobei ferner eine Vielzahl von Verbindungsaufnahmen vorgesehen ist, die in dem Randbereich des Grundkörpers angeordnet sind und die Vertiefungen in der Unterseite bilden, wobei die Verbindungsaufnahmen und die Verbindungsnasen jeweils eine Kontur und Höhe aufweisen sowie derart relativ zum Grundkörper angeordnet sind, dass benachbarte Modulplatten miteinander verbindbar sind, indem die Verbindungsnasen einer Modulplatte formschlüssig in entsprechende Verbindungsaufnahmen mindestens einer anderen Modulplatte eingreifen.

Die Modulplatte der Erfindung lässt es zu, beliebig geformte Modulplatten-Verbundsysteme zusammenfügen. Das Ausrichten und Verbinden der Modulplatten erfolgt vorzugsweise über die Verbindungsnasen und die Verbindungsaufnahmen. Die Verbindung erfolgt formschlüssig und/oder reibschlüssig. Die Verbindungselemente (Verbindungsnasen und Verbindungsaufnahmen) ermöglichen eine Montage ohne Werkzeuge auf der Baustelle. Aufwändige Arbeiten im Zusammenhang mit einem Ausrichten der Modulplatten oder einem Vermessen der Modulplatten ist nicht erforderlich, selbst wenn keine Nasen und Aufnahmen vorhanden sind. Die Platten werden dann formschlüssig entlang benachbarten Randkanten auf Stoß angelegt und anschließend "verschweißt", indem die Kunststoffplatten mittels Lösungskleber stoffschlüssig miteinander entlang gemeinsamer Randkanten verbunden werden. Es werden nahezu keine Werkzeuge zur Montage der Modulplatten benötigt. Das System ist simpel zu installieren. Die Platten des Systems lassen sich stapeln, so dass wenig Platz während eines Transports benötigt wird. Es wird eine (wasser-)dichte Dachhülle erzeugt, die zur Montage von PV-Modulen geeignet ist. Die Dachhülle erlaubt eine Dachsanierung, ohne alte Dachschichten abtragen zu müssen.

Vorzugsweise sind die Verbindungsnasen und die Verbindungsaufnahmen so ausgebildet, dass sie im Eingriff ein Presssitz definieren.

Mit dieser Maßnahme ist es möglich, dass die miteinander verbundenen Modulplatten allein durch die Verbindungsnasen und die Verbindungsaufnahmen eine geschlossene Fläche bilden, um die darunterliegende Unterkonstruktion insbesondere vor Feuchte zu schützen.

Bei einer bevorzugten Ausführungsform ist der Grundkörper aus Kunststoff hergestellt.

Kunststoff ist preisgünstig, hat ein niedriges Gewicht und lässt sich leicht bearbeiten. Die Verwendung von Kunststoffmodulen im Zusammenhang mit Aufständerungssystemen für PV-Module ist wenig bis gar nicht bekannt. Trotz der Verwendung von Kunststoff kann ein System geschaffen werden, das eine ausreichende Stabilität aufweist, um den hohen Anforderungen an PV-Modul-Montagesystemen zu genügen.

Bei einer besonderen Ausgestaltung sind die Verbindungsnasen gleichmäßig auf der Oberseite im Randbereich des Grundkörpers verteilt.

Diese Maßnahme vereinfacht die Montage. Es ist nicht erforderlich, miteinander zu verbindende Modulplatten vorab auszurichten. Die Modulplatten lassen sich in beliebiger Ausrichtung miteinander verbinden.

Des Weiteren ermöglicht eine gleichmäßige Verteilung der Verbindungsnasen und der Verbindungsaufnahmen eine sichere Verbindung der miteinander zu verbindenden Modulplatten. Die Gefahr, dass Modulplatten in einem größeren Bereich nicht (flächig) miteinander verbunden sind, weil keine Verbindungselemente vorhanden sind, lässt sich so reduzieren bzw. ganz vermeiden.

Insbesondere weist die Oberseite mindestens einen herausragenden Dom mit einer in der Umfangsrichtung geschlossenen Seitenwand und einem Deckel auf, wobei sich der Deckel ohne Unterbrechung an die Seitenwand anschließt und eine Deckelfläche aufweist, die vorzugsweise parallel zur Oberseite des Grundkörpers orientiert ist.

Die Dome können benutzt werden, um die PV-Module entweder direkt auf den Modulplatten zu montieren oder um ein Montagesystem zu fixieren, auf dem wiederum die PV-Module entweder befestigt werden oder in welches sie eingelegt werden.

In einer vorteilhaften Ausgestaltung weist jeder Dom eine offene Unterseite auf, die einer Domöffnung in der Unterseite des Grundkörpers entspricht.

Durch diese Maßnahme ist gewährleistet, dass die Modulplatten stapelbar sind, um den Platz bzw. Raum während einer Lagerung oder eines Transports so gering wie möglich zu halten.

Ferner ist es von Vorteil, wenn der Grundkörper eine symmetrische Grundform aufweist.

Auf diese Weise ist es möglich, dass mehrere miteinander verbundene Modulplatten einen Modulplatten-Verbund bilden, der eine geschlossene Oberfläche definiert. Eine geschlossene Oberfläche kann lichtdicht und/oder wasserdicht sein. Es kommt nur eine einzige Komponente beim Aufbau eines Verbundes zum Einsatz.

Bei einer weiteren besonderen Ausgestaltung weist der Grundkörper mindestens zwei zueinander parallele (imaginäre) Schichten auf, so dass die Überlappungsstöße als vorstehende und überhängende Randabschnitte ausgebildet sind, die sich in dem Modulplatten-Verbund korrespondierend überlappen.

Miteinander verbundene Modulplatten bilden im verbundenen Zustand eine einheitliche Dicke. Die Modulplatten liegen flach auf der Unterkonstruktion auf. Es kommt zu keinen stufenartigen Erhebungen im Bereich der einander überlappenden Modulplatten. Der Modulplatten-Verbund liegt flächig auf der Unterkonstruktion auf. Es besteht kein Risiko, dass Feuchtigkeit zwischen dem Modulplatten-Verbund und der Unterkonstruktion sammeln kann.

Bei einer weiteren vorteilhaften Ausführungsform sind die zwei parallelen Schichten senkrecht zu einer Randkante oder parallel zu einer Diagonalen zwischen sich gegenüberliegenden Ecken zueinander verschoben, wobei jede Ecke durch aneinander angrenzende Randkanten definiert ist. Es versteht sich, dass sich die vorstehenden Randabschnitte mit den überhängenden Randabschnitten immer wieder abwechselnd wiederholen können. Es ist nicht erforderlich, dass alle vorstehenden Randabschnitte hintereinander aufgereiht sind und dass alle überhängenden Randabschnitte hintereinander aufgereiht sind.

Insbesondere sind die die Verbindungsnasen aus der Oberseite senkrecht vorstehende Noppen, die in Richtung der Unterseite offen sind.

Vorzugsweise sind die Verbindungsaufnahmen geschlossene Vertiefungen in der Unterseite, die vorzugsweise noppenartig auf der aus der Oberseite herausragen.

Durch die noppenartige Ausbildung der Verbindungsnasen und/oder der Verbindungsaufnahmen lassen sich Stellen, die formschlüssig miteinander verbunden werden müssen, für den Monteur gut erkennen. Noppen lassen sich fertigungstechnisch einfach herstellen.

Gemäß einer weiteren bevorzugten Ausführungsform ist mindestens ein, vorzugsweise metallischer, Verstärkungstreifen in die Oberseite fest und dicht eingefügt, dessen Oberseite von außen frei zugänglich ist. Der Verstärkungsstreifen kann eine Befestigungsnut aufweisen.

Der Verstärkungsstreifen dient zur Befestigung der PV-Module oder eines zusätzlichen Montagesystems, ohne dass der Modulplatten-Verbund durchlöchert wird und somit undicht wird.

Ferner können die Modulplatten über ihre Verbindungsnasen und Verbindungsaufnahmen flächendeckend, und vorzugsweise wasserdicht, miteinander verbunden sein.

Oben erwähnte Aufgabe wird ferner durch ein Verfahren gelöst zum Herstellen einer flächendeckenden Modulplattenverbunds aus einer Vielzahl von Modulplatten aus Kunststoff, wobei der Modulplattenverbund ausgebildet ist, eine Vielzahl von PV-Modulen sicher auf einem Dach zu tragen und das Dach wasserdicht abzudecken, und wobei jede der Modulplatten vorzugsweise gemäß der Erfindung ausgebildet ist, mit folgenden Schritten: a) Auflegen einer Modulplatte auf das Dach; b) überlappendes Auflegen einer weiteren Modulplatte auf die bereits auflegte Modulplatte, so dass eine Oberseite der bereits aufgelegten Modulplatte formschlüssig mit einer Unterseite einer benachbarten Modulplatte in Eingriff kommen; c) Benetzen eines Spalts zwischen sich überlappenden Randbereichen der miteinander in Eingriff zu bringenden Modulplatten mit einem Lösungskleber, so dass sich zwischen den formschlüssig verbundenen Modulplatten eine wasserdichte stoffschlüssige Verbindung ausbildet; und d) Wiederholen der Schritte b) und c) bis alle Modulplatten stoffschlüssig miteinander verbunden sind.

Außerdem wird die obenstehende Aufgabe durch ein Verfahren gelöst zum Herstellen einer Modulplatte mit folgenden Schritten: Einlegen eines warmen Modulplatten-Formlings zwischen eine Matrize und eine Patrize; Schließen der Patrize und der Matrize unter Druck, um die Modulplatte in ihre Endform durch Tiefzeihen oder Pressen umzuformen.

Auf diese Weise wird verhindert, dass es zu einem (negativen) Memory-Effekt kommt. Die Platten bleiben in ihrer gewünschen Form, selbst wenn sie für längerer Zeit, z.B. in gestapelter Form, bevorratet werden.

Vorzugsweise wird zumindest ein metallischer Verstärkungsstreifen zwischen die Matrize und die Patrize gelegt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Modulplatte gemäß der vorliegenden Erfindung;
- Fig. 2: eine Seitenansicht der Modulplatte der Fig. 1 entlang der Längsrichtung X der Modulplatte;
- Fig. 3A: eine Vergrößerung des Kreises, der in der Fig. 2 mit III-A bezeichnet ist;
- Fig. 3B: eine Vergrößerung des Kreises, der in der Fig. 2 mit III-B bezeichnet ist;
- Fig. 4: eine Schnittansicht entlang der Linie IV der Fig. 2;
- Fig. 5: eine Schnittansicht eines überlappenden Bereichs von zwei Modulplatten, die miteinander verbunden sind;
- Fig. 6: eine Draufsicht auf einen schematisch dargestellten Modulplatten-Verbund, der aus Modulplatten gemäß der Fig. 1 zusammengebaut wurde;
- Fig. 7: einen anderen Modul-Plattenverbund aus Modulplatten gemäß einer anderen Ausführungsform;
- Fig. 8: ein Flussdiagramm eines Verfahrens zum Herstellen einer dichten Dachhülle mit PV-Modul-Trägereigenschaften;
- Figuren 9A und 9B: eine Schnittansicht eines Tiefziehwerkzeugs zur Herstellung einer Modulplatte in einem geöffneten Zustand (Fig. 9A) und in einem geschlossenen Zustand (Fig. 9B); und
- Fig. 10: ein Flussdiagramm eines Verfahrens zum Herstellen einer Modulplatte.

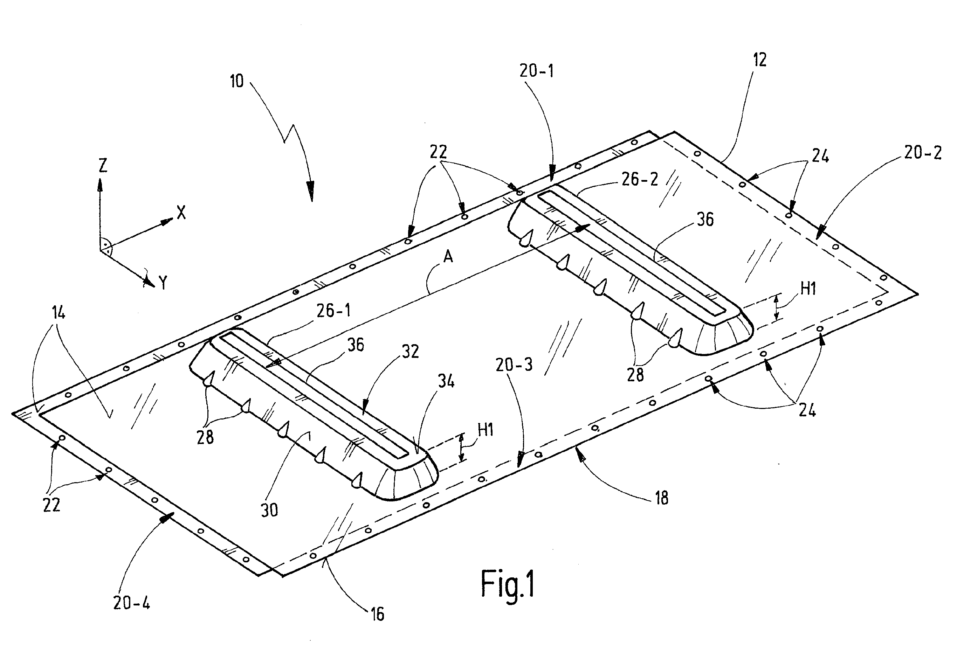

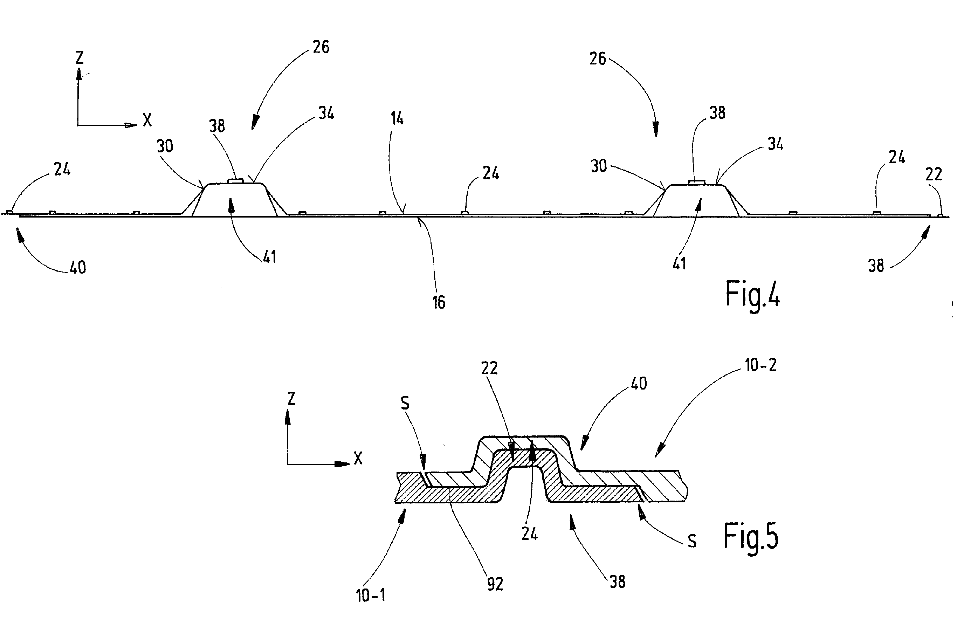

In der nachfolgenden Beschreibung wird jede Modulplatte gemäß der Erfindung mit dem Bezugszeichen 10 bezeichnet werden. Fig. 1 zeigt eine perspektivische Ansicht einer einzelnen Modulplatte 10, die einen im Wesentlichen ebenen Grundkörper 12 aufweist. Der Grundkörper 12 ist plattenartig ausgebildet. Der Grundkörper 12 weist eine im Wesentlichen ebene Oberseite 14 und eine im Wesentlichen ebene Unterseite 16 auf, die sich gegenüberliegen. Die Oberseite 14 und die Unterseite 16 sind durch eine umlaufende Randkante 18 miteinander verbunden. Der Grundkörper 12 weist einen Randbereich 20 auf, wobei in der Fig. 4 exemplarisch vier Randbereiche 20-1 bis 20-4 angedeutet sind, weil der Grundkörper 12 der Fig. 1 eine rechteckige Grundform aufweist. Die Form der Grundform ist frei wählbar. Vorzugsweise werden symmetrische Vielecke gewählt. Die Randbereiche 20-1 und 20-4 sind stufenförmig gegenüber dem restlichen Grundkörper 12 abgesetzt und stehen leicht vor oder hängen leicht über. Die Randbereiche 20-2 und 20-3 befinden sich im Vergleich zu den Randbereichen 20-1 und 20-4 auf einem leicht höheren Niveau, wie es nachfolgend unter Bezugnahme auf die Fig. 4 und 5 noch näher ausgeführt werden wird. Die Randbereiche 20-2 und 20-3 hängen leicht über. Die Randbereiche 20 bilden sogenannte Überlappungsstöße aus.

Die Randbereiche 20-1 bis 20-4 stellen solche Bereiche des Grundkörpers 12 dar, die zur überlappenden Verbindung mit anderen, in der Fig. 1 nicht dargestellten, Modulplatten 10 benutzt werden. Die Randbereiche 20-2 und 20-3 sind durch eine Hilfslinie (Strichlinie) vom restlichen Grundkörper 12 getrennt dargestellt. Die Randbereiche 20-1 bis 20-4 können zusätzliche Verbindungselemente (Nasen/Aufnahmen) aufweisen, die zum formschlüssigen und/oder reibschlüssigen Verbinden mehrerer Modulplatten 10 eingerichtet sind. Die Modulplatten 10 sind aber auch ohne die zusätzlichen Verbindungselement formschlüssig aneinander ausrichtbar, wie es nachfolgend noch näher erläutert werden wird.

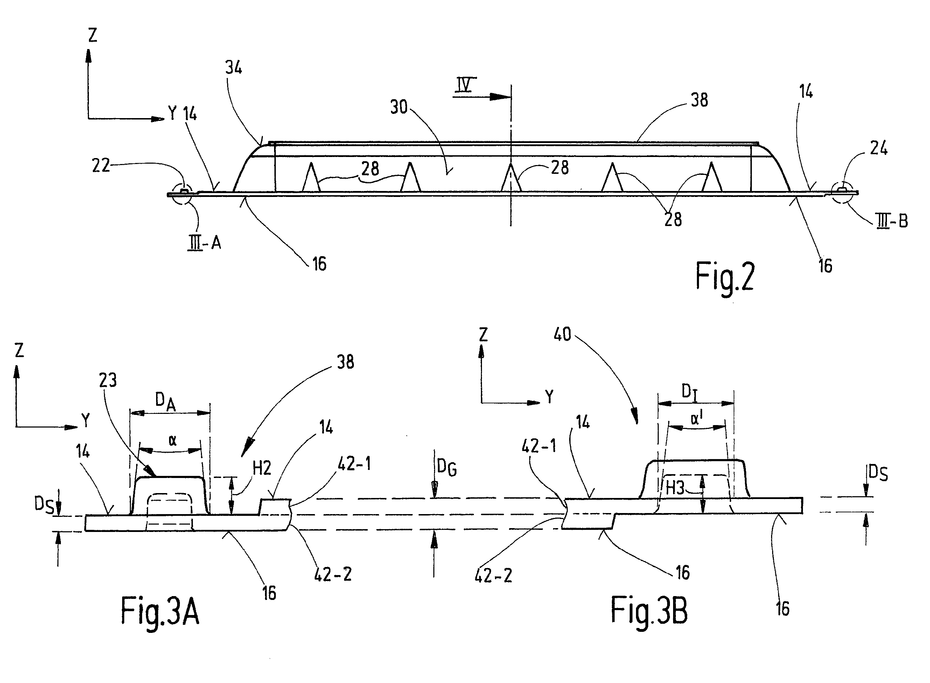

Die stufenartig abgesetzten vorstehenden Randbereiche 20-1 und 20-4 können eine Vielzahl von Verbindungsnasen 22 aufweisen. Der Aufbau einer exemplarischen Verbindungsnase 22 wird im Zusammenhang mit Fig. 3A noch genauer erläutert werden. Die Verbindungsnasen 22 sind vorzugsweise gleich zueinander beabstandet, d.h. insbesondere gleichmäßig über die Randbereiche 20 verteilt. Die Verbindungsnasen 22 können entlang von Geraden ausgerichtet werden. Die Verbindungsnasen 22 können beliebig geformte Grundflächen aufweisen, stehen aber aus der Oberfläche 14 des Grundkörpers 12 vor. Die Grundfläche ist z.B. ein Kreis oder ein Rechteck.

Die überhängenden Randbereiche 20-2 und 20-4 können dann Verbindungsaufnahmen 24 aufweisen. Eine Verbindungsaufnahme 24 stellt z.B. eine Vertiefung in der Unterseite 16 dar, die zur Aufnahme einer Verbindungsnase 22 eingerichtet ist. Die Verbindungsaufnahme 24 kann noppenartig aus der Oberseite 14 vorstehen. Dies hängt davon ab, wie hoch die Verbindungsnasen 22 sind und wie dick der Grundkörper 12 ist. Jede Verbindungsaufnahme 24 ist hinsichtlich ihrer Form so ausgebildet, dass sie eine entsprechende Verbindungsnase 22 form- und/oder reibschlüssig aufnehmen kann. Die Anordnung der Verbindungsaufnahmen 24 ist auf die Anordnung der Verbindungsnasen 22 hinsichtlich Abstand und Ausrichtung angepasst. Vorzugsweise ist jede Verbindungsnase 22 einer ersten Modulplatte 10 einer Verbindungsaufnahme einer zweiten Modulplatte 10 zugeordnete, die miteinander zu verbinden sind. Die Modulplatten 10 sind vorzugsweise identisch ausgebildet.

Die Oberseite 14 kann einen oder mehrere Dome 26 aufweisen, die aus der Oberseite 14 des Grundkörpers 12 vorstehen und die entweder zur direkten Befestigung eines oder mehrerer PV-Module (nicht dargestellt) oder zur indirekten Befestigung eines oder mehrerer PV-Module über ein Aufständersystem (nicht gezeigt) eingerichtet sind. Ein exemplarisches Aufständersystem ist in der deutschen Patentanmeldung DE 10 2011 014 391 (Anmeldetag 10.03.2011) gezeigt, welches auf den Domen 26-1 und 26-2 befestigt werden kann, ohne die Dichtigkeit zu gefährden. So ist die Dichtigkeit einer Unterkonstruktion (Dach oder Flachdach) gewährleistet. Regenwasser kann die Modulplatte 10 nicht durchdringen, sondern wird oberflächlich abgeleitet.

Die Dome 26-1 und 26-2 können in einem beliebigen Abstand A zueinander auf der Oberseite 14 angeordnet werden, wobei eine Verschattung berücksichtigt werden kann. Der Abstand A kann für den Neigungswinkel der nicht dargestellten PV-Module gegenüber der Horizontalen (XY-Ebene) ausschlaggebend sein, wenn das Aufständersystem der DE 10 2011 014 391 benutzt wird. Die Form der Dome 26 ist beliebig wählbar. In der Fig. 1 weisen die Dome 26 eine balkenförmige Gestalt auf, die durch seitliche Verstärkungsrippen 28 gegenüber der Oberseite 14 abgestützt wird. Die Dome 26 weisen eine in umfänglicher Richtung geschlossene Seitenwand 30 auf, die in die Oberseite 14 des Grundkörpers 12 kontinuierlich übergeht, das heißt dicht ist. Die Seitenwand 30 wird von einem Deckel 32 mit einer Deckelfläche 34 dicht verschlossen. Die Deckelfläche 34 ist vorzugsweise parallel zur Oberseite 14 orientiert. Auf der Deckelfläche 34 kann ein Verstärkungsstreifen 36 angeordnet werden, der vorzugsweise aus Metall hergestellt ist. Der Verstärkungsstreifen 36 kann mit der Deckelfläche 34 verfügt sein, um eine sichere Verbindung mit dem Grundkörper 12 herzustellen. Die Verstärkungsstreifen 36 weisen eine Dicke (parallel zur Z-Richtung) auf, die ausreicht, um zum Beispiel gewindeschneidende Schrauben in die Verstärkungsstreifen 36 einzudrehen, um zum Beispiel das oben genannte Gelenkständersystem (Aufständersystem) an der Modulplatte 10 zu befestigen. Hierzu werden vorzugsweise Spezialschrauben der Firma Würth eingesetzt, die beim Eindrehen ein wasserdichtes Gewinde schneiden. Die Dome 26 sind vorzugsweise einstückig mit dem Grundkörper 12 ausgebildet.

Die Dome 26 erstrecken sich in der Fig. 1 vorzugsweise entlang der Querrichtung Y und weisen insbesondere eine gleiche Höhe H1 (parallel zur Z-Richtung) auf. Es versteht sich, dass die Höhen der Dome 26-1 und 26-2 unterschiedlich gewählt werden können. Vorteil von gleich hohen Domen 26 ist, dass zur Lagerung und zum Transport mehrere Modulplatten 10 übereinander gestapelt werden können. Dazu sind die Dome 26 an der Unterseite 16 offen und innen hohl ausgebildet, wie es nachfolgend unter Bezugnahme auf Fig. 4 noch deutlicher beschrieben werden wird. Die Dome 26-1 und 26-2 sind vorzugsweise gleich und symmetrisch ausgebildet, sodass die Modulplatten 10 in beliebiger Ausrichtung übereinander gestapelt werden können. Die Stapelbarkeit hat den Vorteil, dass für die Modulplatten 10 während eines Transports vom Modulplattenhersteller zur Baustelle wenig Platz benötigt wird. Da die Modulplatten 10 vorzugsweise aus Kunststoff hergestellt sind, können große Mengen von Modulplatten 10 im gestapelten Zustand auf engstem Raum zur Baustelle transportiert werden.

Bezug nehmend auf Fig. 2 ist eine Seitenansicht der Modulplatte 10 der Fig. 1 gezeigt, wenn man in der Längsrichtung X entlang der Modulplatte 10 blickt. Im linken Randbereich 20 ist eine Verbindungsnase 22 in einem gegenüber dem restlichen Grundkörper 12 vorstehenden Randabschnitt 38 gezeigt, der vergrößert in der Fig. 3A gezeigt ist. Am rechten Randbereich 30 ist eine exemplarische Verbindungsaufnahme 24 gezeigt, die aus der Oberseite 14 herausragt und nach unten offen ist, das heißt eine Vertiefung in der Unterseite 16 bildet. Die Verbindungsaufnahme 24 ist in einem überhängenden Randabschnitt 40 angeordnet, der in Fig. 3B vergrößert dargestellt ist.

Der vorstehende bzw. überstehende Randabschnitt 38 ist vergrößert in der Fig. 3A gezeigt. Der Randabschnitt 38 steht gegenüber dem restlichen Grundkörper 12 vor und weist eine Verbindungsnase 22 auf, die hier exemplarisch in Form einer Noppe 23 ausgebildet ist. Die Noppe 23 ragt aus der Oberfläche 14 des überstehenden Randabschnitts 38 nahezu senkrecht heraus. Die Noppe 23 kann innen hohl ausgebildet sein, wie es durch eine Strichlinie angedeutet ist. Die Noppe 23 kann aber auch aus Vollmaterial gebildet werden. Es versteht sich, dass alle Ausführungen zur Noppe 23 analog für anders geformte Verbindungsnasen 22 gelten. Eine äußere Mantelfläche der Noppe 23 verjüngt sich mit zunehmendem Abstand zur Oberseite 14. Die Noppe 23 stellt einen Kegelstumpf mit einem Öffnungswinkel α dar. Die Grundfläche (Kreis) der Noppe 23 hat einen Außendurchmesser D_{A}, der größer als ein nicht näher bezeichneter Durchmesser einer Deckfläche des Kegelstumpfs ist. Der Kugelstumpf der Noppe 23 weist eine Höhe H2 auf.

Bezug nehmend auf Fig. 3B ist die in der Fig. 2 gezeigte Verbindungsaufnahme 24 im überhängenden Randabschnitt 40 vergrößert dargestellt. Die Verbindungsaufnahme 24 ist ebenfalls noppenartig ausgebildet und weist einen sich nach oben verjüngenden Innendurchmesser D_{I} auf, der dem Außendurchmesser D_{A} der Verbindungsnase 22 der Fig. 3A entspricht. Eine nicht näher bezeichnete Innenwandung der Verbindungsaufnahme 24 der Fig. 3B hat die Form eines Kegelstumpfs, der der Außenfläche der Verbindungsnase 22 der Fig. 3A entspricht. Die Innenwandung hat einen Öffnungswinkel α, die dem Öffnungswinkel α der Fig. 3A entspricht. Die Höhe H3 der Vertiefung in der Unterseite 16 entspricht vorzugsweise der Höhe H2 der Verbindungsnase 22 der Fig. 3A, kann aber auch kleiner sein. Die Außenkontur der Verbindungsnase 22 der Fig. 3A ist an eine Innenkontur der Verbindungsaufnahme 24 der Fig. 3B derart angepasst, dass die Verbindungsnase 22 der Fig. 3A formschlüssig in die Verbindungsaufnahme 24 der Fig. 3B eingreifen kann, wie es nachfolgend noch genauer unter Bezugnahme auf Fig. 5 erläutert werden wird, die die Verbindungsnase 22 im eingesteckten Zustand in der Verbindungsaufnahme 24 zeigt.

Zwischen den Darstellungen der Figuren 3A und 3B sind horizontal orientierte Hilfslinien gezeichnet, die die Ausrichtung des überstehenden Randabschnitts 38 relativ zum überhängenden Randabschnitt 40 verdeutlichen sollen. Der Grundkörper 12 der Modulplatte 10 ist schichtweise aufgebaut. In den Figuren 3A und 3B sind zwei parallel zueinander orientierte Schichten 42-1 und 42-2 gezeigt, die vorzugsweise einstückig ausgebildet sind. Die Verbindungsnase 22 des überstehenden Randabschnitts 38 der Fig. 3A ragt aus der Schicht 42-2 heraus. Die Verbindungsaufnahme 24 ragt aus der Schicht 42-1 heraus. Die Schichten 42-1 und 42-2 definieren in den Randabschnitten 38 und 40 jeweils eine Stufe. Die Stufen sind so ausgebildet, dass ein Spalt S zwischen verbundenen Modulplatten 10 (vgl. auch Fig. 5) möglichst klein ausfällt.

Fig. 4 zeigt eine Schnittansicht entlang der Linie IV der Fig. 2, so dass man aus der Querrichtung Y seitlich auf die Modulplatte 10 im Schnitt blickt. Die Dome 26 definieren an der Unterseite 16 jeweils einen nach unten offenen Hohlraum 41.

Bezug nehmend auf Fig. 5 ist eine Schnittansicht von zwei miteinander verbundenen Modulplatten 10-1 und 10-2 gezeigt. Die Verbindungsnase 22 der Modulplatte 10-1 greift formschlüssig in die Verbindungsaufnahme 24 der Modulplatte 10-2 ein. Die Dimensionen der Verbindungsnase 22 und der Verbindungsaufnahme 24 können so gewählt sein, dass die Nase 22 in einem Presssitz in der Aufnahme 24 sitzt.

Eine Länge (in X-Richtung) des überhängenden Randabschnitts 40 der Modulplatte 10-2 korrespondiert mit den Abmessungen des vorstehenden bzw. überstehenden Randabschnitts 38 der Modulplatte 10-1 derart, dass Spalten S zwischen den Randkanten 18 der benachbarten Modulplatten 10-1 und 10-2 nahezu nicht vorhanden sind. Die Unterseite 16 der Modulplatte 10-2 kann flächig auf der Oberseite 14 der Modulplatte 10-1 aufliegen. Diese Art der Verbindung verhindert, dass Wasser, insbesondere Regenwasser, welches über die Spalte S eintreten könnte, unter die Modulplatten 10-1 und 10-2 gelangt. Wie es nachfolgend noch näher ausgeführt werden wird, wird in diesem Bereich des flächigen Kontakts zwischen der Modulplatte 10-1 und der Modulplatte 10-2 auch ein Lösungskleber 92 eingesetzt, der die vorzugsweise aus Kunststoff bestehenden Modulplatten 10-1 und 10-2 in ihren jeweiligen Verbindungsbereichen anlöst und anschließend stoffschlüssig miteinander "verschweißt". Auf diese Weise ist es möglich, auch in den überlappenden Bereichen der Modulplatten 10-1 und 10-2, wo keine Verbindungsnasen 22 und Verbindungsaufnahmen 24 formschlüssig miteinander in Eingriff sind, (wasser-)dicht miteinander zu verbinden.

Es versteht sich, dass die Nasen 22 und die Aufnahmen 24 generell nicht benötigt werden, sondern lediglich die Ausrichtung benachbarter Platten 10, insbesondere während der Montage, erheblich erleichtern. Natürlich unterstützen die Nasen-Aufnahmeverbindungen auch eine Kompensation von Kräften, die in der Ebene (XY-Ebene der Fig. 1) des Grundkörpers 12 wirken. Derartige Kräfte werden zum Beispiel durch Wind hervorgerufen, der auf (nicht gezeigte) PV-Module wirkt und über eine (nicht gezeigte) Aufständerung in die Modulplatten eingeleitet wird. Die überhängenden und vorstehenden Überlappungsstöße (Randbereiche 20) nehmen derartige Kräftige aber auch ohne die Noppen 22 und die Aufnahmen 24 auf, weil sie formschlüssig aufeinander abgestimmt sind. Die Randkanten 18 benachbarter Modulplatten im überlappenden Randbereich 20 aneinander und bilden im Idealfall einen nahezu vernachlässigbar schmalen Spalt S zwischen den Oberseiten benachbarter Modulplatten 10 aus. Lösungskleber wird in den Spalt eingebracht, so dass das Material der benachbarten Platten angelöst wird, um zumindest eine linienförmige stoffschlüssige Verbindung zwischen benachbarten, d.h. aneinander stoßenden, Modulplatten 10 auszubilden, die mit einer Verschweißung vergleichbar ist.

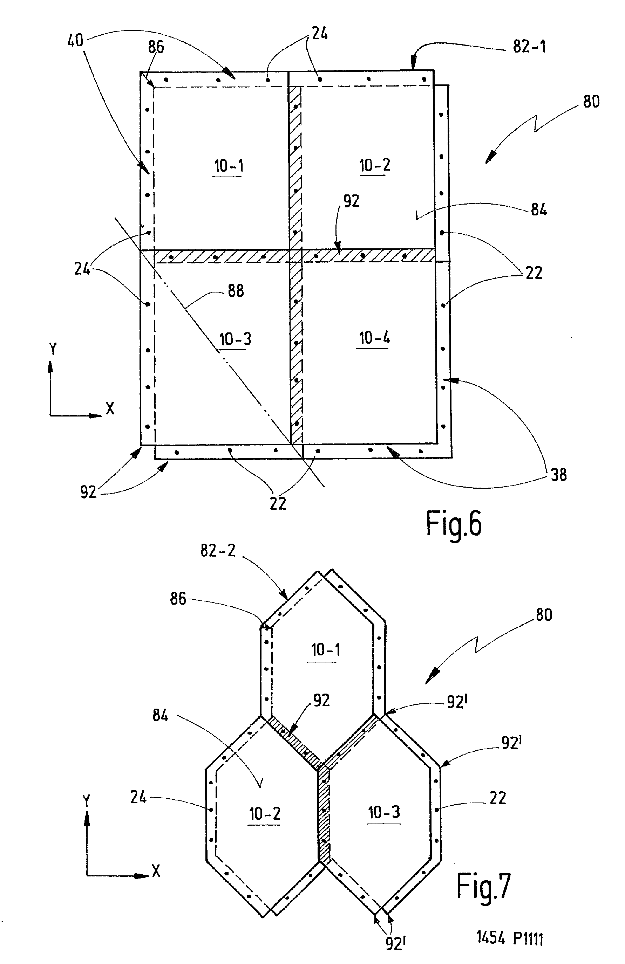

Fig. 6 zeigt eine Draufsicht auf einen ersten Verbund 80 von exemplarisch vier Modulplatten 10-1 bis 10-4. Die Modulplatten 10-1 bis 10-4 weisen z.B. jeweils eine identische, rechteckige Grundform 82-1 auf. Im verbundenen Zustand der Fig. 6 definieren die Modulplatten 10-1 bis 10-4 gemeinsam eine geschlossene Oberfläche 84. Unter der geschlossenen Oberfläche 84 wird nachfolgend eine Oberfläche verstanden, die eine Unterkonstruktion (wasser-)dicht abdeckt.

In der Fig. 6 ist der mehrschichtige Aufbau des Grundkörpers 12 gut zu erkennen. Der Grundkörper 12 der Modulplatten 10-1 bis 10-4 ist aus zwei rechteckigen, gleich geformten Schichten 42 gebildet, die entlang einer Diagonalen 88 der Grundform 82-1 versetzt sind, wie es durch einen Pfeil 86 angedeutet ist. Auf diese Weise erhält man die überstehenden und überhängenden Randabschnitte 38 und 40. Die Position der Verbindungsnasen 22 bzw. der Verbindungsaufnahmen 24 sind so gewählt, dass sie im verbundenen Zustand miteinander korrespondieren.

In den überlappenden Bereichen sind die Modulplatten 10 mit einem Lösungskleber 92 benetzt worden, um insbesondere eine flächige, dichte Verbindung zwischen den einzelnen Modulplatten 10 herzustellen, die stoffschlüssig ist. Die Bereiche der stoffschlüssigen Verbindung sind in der Fig. 6 schraffiert dargestellt. Um die stoffschlüssige Verbindung herzustellen, können z.B. die überstehenden Ränder 38 mit dem Lösungskleber 92 eingestrichen werden. Gleiches gilt alternativ oder ergänzend für die überhängenden Randabschnitte 40. Anschließend werden die Modulplatten 10 über die Verbindungsnasen 22 und die Verbindungsaufnahmen 24 formschlüssig miteinander in Verbindung gebracht. Dann kann ein leichter Druck auf die überlappenden Bereiche der Modulplatten 10 ausgeübt werden, so dass sich nach kurzer Zeit eine stoffschlüssige Verbindung zumindest zwischen den sich überlappenden Bereichen der Modulplatten 10 ausbildet.

Die Verbindung zwischen benachbarten Modulplatten 10 muss aber nicht flächig stoffschlüssig sein. Es reicht aus, wenn Spalten S (vgl. Fig. 5) zwischen den Oberseiten der Modulplatten 10 mit dem Lösungskleber ausgegossen werden, um einen linieförmige stoffschlüssige Verbindung zwischen den Modulplatten 10 zu erreichen. Im Fall der Fig. 6 reicht es also aus, innen liegende Stoßkanten zwischen benachbarten Modulplatten 10 mit dem Lösungskleber auszugießen oder zu bestreichen.

Fig. 7 zeigt eine Draufsicht auf einen weiteren Verbund 80, wobei die Modulplatten 10, von denen in der Fig. 7 drei Stück dargestellt sind, eine hexagonale Grundform 82-2 aufweisen. Auch die hexagonalen Modulplatten 10-1 bis 10-3 der Fig. 7 sind vorzugsweise mehrschichtig, hier zweitschichtig, aufgebaut. Die Schichten 42 sind versetzt zueinander angeordnet, indem der Versatz 86 z.B. senkrecht zu einer der Randkanten orientiert ist, wie es in der Fig. 7 exemplarisch eingezeichnet ist. Die Ecken 92' der hexagonalen Grundform 82-2 sind also hier parallel zur X-Richtung verschoben.

Benachbarte Modulplatten 10 passen grundsätzlich formschlüssig zusammen und bilden eine geschlossene Verbindungslinie zwischen sich aus.

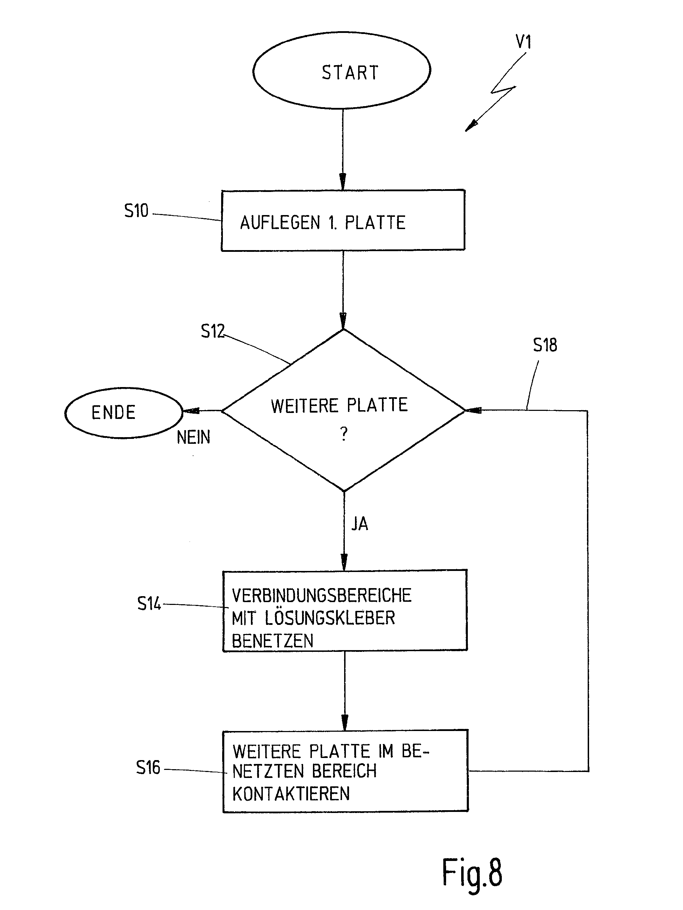

Fig. 8 zeigt ein Flussdiagramm V1, das ein Verfahren zum Aufbauen eines (wasser-)dichten Modulplatten-Verbunds 80 erläutert.

In einem ersten Schritt S10 des Verfahrens V1 wird eine erste Modulplatte 10 auf eine Unterkonstruktion, wie z.B. ein Dach oder ein Flachdach gelegt. In einem weiteren Schritt S12 wird überprüft, ob weitere Platten zu verlegen sind. Wenn weitere Platten zu verlegen sind, können in einem weiteren Schritt S14 Verbindungsbereiche der miteinander zu verbindenden (benachbarten) Modulplatten 10 mit einem Lösungskleber 92 benetzt werden. Bei den Verbindungsbereichen handelt es sich um solche Bereiche der Modulplatten 10, die sich nach dem Zusammenstecken, d.h. dem Verbinden der Verbindungsnasen 22 und der Verbindungsaufnahmen 24, bzw. dem aneinander Ausrichten (ohne Nase-Aufnahme-Verbindungen) vorzugsweise überlappen. Üblicherweise sind dies die überstehenden und überhängenden Randabschnitte 38 und 40. Wenn die Verbindungsbereiche mit dem Lösungskleber 92 benetzt sind (Streichen, Sprühen, Giessen, etc.), wird die zu verbindende Modulplatte 10 im Verbindungsbereich auf- oder angelegt, der mit dem Lösungskleber 92 benetzt ist. Es versteht sich, dass beide Modulplatten 10, die miteinander verbunden werden sollen, mit dem Lösungskleber 92 benetzt werden können. Es kann aber auch nur eine einzige Modulplatte 10 mit dem Lösungskleber 92 benetzt werden. Die miteinander zu verbindenden Modulplatten 10 können über ihre Verbindungsnasen 22 und ihre Verbindungsaufnahmen 24 miteinander ausgerichtet und in Eingriff gebracht werden. Der Lösungskleber 92 kann aber auch erst nach einem Ausrichten (und ggf. Verbinden) aufgebracht werden. Der Lösungskleber 92 kann mehrmals aufgebracht werden.

Anschließend kann ein leichter Druck auf die sich überlappenden Verbindungsbereiche der miteinander zu verbindenden Modulplatten 10 ausgeübt werden, um möglichst rasch und sicher eine stoffschlüssige Verbindung zwischen den miteinander zu verbindenden, benachbarten Modulplatten 10 herzustellen.

In einem Schritt S18 kehrt man dann zur Abfrage des Schritts S12 zurück. Wenn weitere Modulplatten 10 zu verlegen sind, werden die Schritte S14, S16 und S18 solange wiederholt, bis der gesamte Modulplatten-Verbund 80 aufgebaut ist. Danach endet das Verfahren V1.

Es versteht, dass die Unterkonstruktion vorab mit Isolierungsmatten, Dämmmaterialien und Ähnlichem ausgelegt werden kann, bevor der Modulplatten-Verbund 80 auf die Unterkonstruktion aufgebracht wird.

Der Modulplatten-Verbund 80 kann selbst an der Unterkonstruktion oder den darunter ausgelegten Materialien befestigt werden.

Auf die oben beschriebene Weise wird eine (wasser-)dichte Unterkonstruktionshülle erzeugt, die die Unterkonstruktion vor Sonne, Wind, Feuchtigkeit und anderen Umwelteinflüssen schützt. Der Modulplatten-Verbund 80 kann insbesondere zur Dachsanierung eingesetzt werden. Außerdem dient sie zur Aufständerung von PV-Modulen.

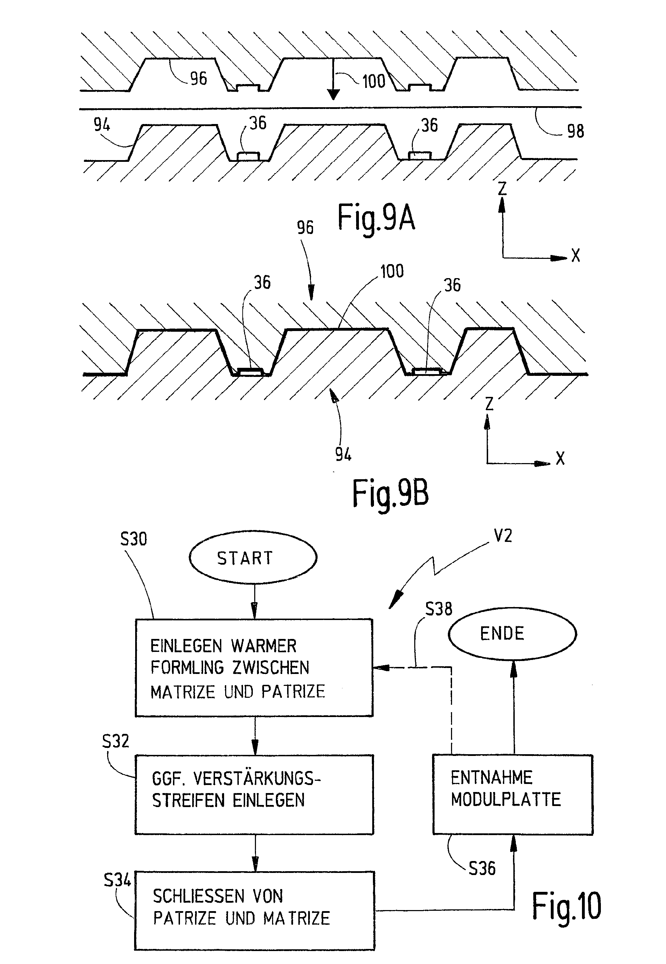

Bezug nehmend auf die Figuren 9A und 9B sowie die Fig. 10 wird nachfolgend ein Werkzeug sowie ein Prozess beschrieben, mit denen man aus einem Formling 98 eine Modulplatte 10 gemäß der Erfindung erstellen kann, wie sie exemplarisch in Fig. 1 gezeigt ist.

In der Fig. 9A ist ein Fügewerkzeug in einem geöffneten Zustand und in der Fig. 9B in einem geschlossenen Zustand gezeigt. Im geöffneten Zustand der Fig. 9A wird ein, vorzugsweise warmer, Formling 98 zwischen eine Matrize 94 und eine Patrize 96 gelegt, so dass der Formling 98 auf der Matrize 94 aufliegt. Sofern es gewünscht ist, können die Verstärkungsstreifen 36 vorab in die Matrize 94 eingelegt werden, um mit dem Formling 98 während eines nachfolgenden Tiefziehvorgangs verfügt zu werden. Der Tiefziehvorgang ist in der Fig. 9A durch einen Pfeil 100 angedeutet. Der Pfeil 100 deutet an, dass die Patrize 96 von oben in die Matrize 94 bewegt wird, und zwar unter einem geeigneten (hohen) Druck. Es versteht sich, dass die Matrize und die Patrize hinsichtlich ihrer Konturen derart aufeinander abgestimmt sind, dass die Matrize 94 und die Patrize 96 im geschlossenen Zustand der Fig. 9B einen Hohlraum zwischen sich lassen, der der herzustellenden Modulplatte 10 entspricht.

Wenn die Modulplatten 10 gemäß dem Herstellungsverfahren V2 erzeugt werden, biegen sie sich auch nach längerer Lagerzeit nicht auf und sind somit gut stapelbar.

Die Fig. 10 zeigt ein Flussdiagramm eines Herstellungsverfahrens V2, mit den Modulplatten 10 gemäß der Erfindung hergestellt werden. In einem Schritt S30 wird ein (warmer) Formling 98 zwischen die Matrize 94 und die Patrize 96 eingelegt. Beim Formling 98 handelt es sich um eine Kunststoffplatte entsprechender Dicke. Dann wird ggf. vorher mindestens ein Verstärkungsstreifen 36 in die Matrize 94 eingelegt, wie es durch einen Schritt S32 in der Fig. 10 gezeigt ist. Anschließend wird in einem Schritt S34 die Patrize 96 nach unten bewegt, wie es in Fig. 9A mit dem Pfeil 100 angedeutet ist, um das Tiefziehwerkzeug, welches aus der Matrize 94 und der Patrize 96 besteht, zu schließen. In einem weiteren Schritt S36 wird die fertig umgeformte Modulplatte 10 entnommen und kann anschließend nachbearbeitet werden (Schneiden, Entgraden, etc.), was im Flussdiagramm der Fig. 10 nicht gezeigt ist. Anschließend beginnt der Prozess von vorn, wie es durch einen Pfeil S38 angedeutet ist. Anderenfalls endet das Herstellungsverfahren V2.

Es versteht sich, dass die in der Fig. 1 gezeigten Dome 26 benachbarter Modulplatten 10 so zueinander beabstandet sind, dass Schatteneffekte benachbarter PV-Module keine Rolle spielen. Dies bedeutet, dass Verschattungsabstände berücksichtigt werden können.

Die Modulplatte 10 der Erfindung zeichnet sich dadurch aus, dass sie lediglich eine einzige Komponente darstellt. Die Modulplatte 10 ermöglicht einen hohen Vormontagegrad. Bei der Endmontage werden nur wenige Werkzeuge benötigt. Die Monteure auf der Baustelle können schnell arbeiten, weil die Modulplatten 10 einfach verlegt werden können, ohne komplex ausgerichtet oder eingemessen werden zu müssen.

Das Erstellen von Modulplatten-Verbundsystemen ist einfach möglich. Es können beliebig geformte Flächen abgedeckt werden. Die Abdeckung ist durchdringungsfrei.

Ein Modulplatten-Verbund 80 stellt eine geringe (zusätzliche) Ballastierung dar. Dennoch werden PV-Module, die mit einem Modulplatten-Verbund 80 gemäß der Erfindung auf eine Unterkonstruktion befestigt sind, nicht durch Winde ausgehoben. Eine zusätzliche Beschwerung bzw. Ballastierung, wie z.B. mit Kieselsteinen, entfällt.

Aufgrund des verwendeten Grundstoffs sind die Modulplatten 10 witterungsbeständig. Jede Modulplatte ist vorzugsweise aus Polyamid (z.B. PA6, PA6.6 bzw. PA6.6 (Nylon), PA6.10, etc) hergestellt. Alternativ können PC, PVC, PA x, PMMA, PVDF, PS, PE oder PP verwendet werden. Um den Kunststoff UV-stabil zu machen, kann z.B. Ruß zugesetzt werden. Vorzugsweise ist der Kunststoff schwarz.

Regenwasser kann ohne Weiteres einfach abfließen, da lediglich die Dome aus der Oberseite 14 vorstehen und ansonsten keine Senken vorhanden sind. Eine Dachbegrünung ist ausgeschlossen.

Des Weiteren können Störobjekte, die auf der Unterkonstruktion vorhanden sind (z.B. Schornsteine, Rohre, etc.) ohne Schwierigkeiten ausgespart werden, indem einzelne Modulplatten 10 aus einem Verbund 80 weggelassen werden.

Die Modulplatte 10 der Erfindung ist recyclingfähig. Sie lässt eine ausreichende Hinterlüftung für die PV-Module zu, um Abwärme sicher abzuführen.

Die Modulplatte 10 ist sowohl für gerahmte als auch für rahmenlose PV-Module einsetzbar.

Die Modulplatten 10 können hochkant und/oder quer montiert werden.

Die Dome 26 können mit unterschiedlichen Höhen auf der gleichen Modulplatte 10 ausgebildet sein, um verschiedene Neigungen vorab bereitzustellen.

Als Lösungskleber 92 kann z.B. ein auf Wasser basierender Kleber verwendet werden, der eine lösliche schwache Säure enthalten kann, wie z.B. Ameisensäure. Die schwache Säure wirkt hydrolytsich auf die OH-Gruppe der Moldeküle ein, das heißt, es werden H-Atome abgespalten, so dass diese wieder reaktiv sind und für neue Vernetzungen der Moleküle genutzt werden.

In der oben stehenden Beschreibung der Figuren hat man sich bei der Wahl der Orientierung der Koordinatensysteme an eine Nord-Süd-Ausrichtung (Längsrichtung der Modulplatte 10) bzw. eine Ost-West-Ausrichtung (Querrichtung der Modulplatte 10) angelehnt.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Klage- und Orientierungsangaben (z.B. ",", "seitliche", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

## Patentansprüche

1. Modulplatte (10) zur Bildung eines mehrere Modulplatten aufweisenden wasserdichten Modulplattenverbunds, der zur direkten oder indirekten Aufständerung eines PV-Moduls auf einem Dach geeignet ist, wobei jede Modulplatte einen plattenförmigen, im Wesentlichen ebenen, Grundkörper (12) aus Kunststoff aufweist, der eine Oberseite (14) und eine Unterseite (16) aufweist, die über eine umfänglich umlaufende Randkante (18) miteinander verbunden sind, wobei ein die Randkante (18) aufweisender Randbereich (20) des Grundkörpers umlaufend Überlappungsstöße aufweist, die so ausgebildet sind, dass benachbarte Modulplatten (10) im Modulplattenverbund überlappend und formschlüssig derart aneinander ausrichtbar sind, dass ein Spalt (S) zwischen der Modulplatte und den benachbarten Modulplatten mit einem Lösungskleber auffüllbar ist, der eine stoffschlüssige Verbindung der benachbarten Modulplatten bewirkt.

2. Modulplatte nach Anspruch 1, wobei eine Vielzahl von Verbindungsnasen (22) vorgesehen ist, die aus der Oberseite (14) vorstehen und die in dem umfänglich umlaufenden Randbereich (20) des Grundkörpers (12) verteilt angeordnet sind, wobei ferner eine Vielzahl von Verbindungsaufnahmen (24) vorgesehen ist, die in dem Randbereich (20) des Grundkörpers (12) angeordnet sind und die Vertiefungen in der Unterseite (16) bilden, wobei die Verbindungsaufnahmen (24) und die Verbindungsnasen (22) jeweils eine Kontur und Höhe aufweisen sowie derart relativ zum Grundkörper (12) angeordnet sind, dass die Verbindungsnasen (22) einer Modulplatte (10-1) formschlüssig in entsprechende Verbindungsaufnahmen (24) mindestens einer benachbarten Modulplatte (10-2) eingreifen

3. Modulplatte nach Anspruch 2, wobei die Verbindungsnasen (22) und die Verbindungsaufnahmen (24) so ausgebildet sind, dass sie im Eingriff einen Presssitz definieren.

4. Modulplatte nach einem der Ansprüche 2 oder 3, wobei die Verbindungsnasen (22) gleichmäßig über die Oberseite (14) im Randbereich (20-1, 20-2) des Grundkörpers (12) verteilt sind.

5. Modulplatte nach einem der Ansprüche 1 bis 4, wobei die Oberseite (14) mindestens einen herausragenden Dom (26) mit einer in der Umfangsrichtung geschlossenen Seitenwand (30) und mit einem Deckel (32) aufweist, wobei der Deckel (32) ohne Unterbrechung an die Seitenwand (30) anschließt und eine Deckelfläche (34) aufweist, die vorzugsweise parallel zur Oberseite (14) orientiert ist.

6. Modulplatte nach Anspruch 5, wobei jeder Dom (26) eine offene Unterseite aufweist, die einer Domöffnung in der Unterseite (16) entspricht.

7. Modulplatte nach einem der Ansprüche 1 bis 6, wobei der Grundkörper (12) eine, vorzugsweise symmetrische, Grundform (82-1, 82-2) aufweist, so dass mehrere miteinander verbundene benachbarte Modulplatten (10) einen Modulplatten-Verbund (80) bilden, der eine nahezu geschlossene Oberfläche (84) definiert.

8. Modulplatte nach einem der Ansprüche 1 bis 7, wobei der Grundkörper (12) mindestens zwei zueinander parallele imaginäre Schichten (42-1, 42-2) aufweist, so dass die Überlappungsstöße durch vorstehende und überhängende Randabschnitte (38, 40) ausgebildet sind, die einander in dem Modulplatten-Verbund (80) korrespondierend überlappen.

9. Modulplatte nach Anspruch 8, wobei die zwei parallelen Schichten (42) senkrecht zu einer Randkante (18) oder parallel zu einer Diagonalen (88) zwischen sich gegenüberliegenden Ecken (92) zueinander verschoben (86) sind, wobei jede Ecke (92) durch aneinander angrenzende Randkanten (18) definiert ist.

10. Modulplatte nach Anspruch 2, wobei die Verbindungsnasen (22) aus der Oberseite (14) senkrecht vorstehende Noppen (23) sind, die in Richtung der Unterseite (16) offen sind.

11. Modulplatte nach Anspruch 2 oder 10, wobei die Verbindungsaufnahmen (24) geschlossene Vertiefungen in der Unterseite (16) sind, die noppenartig aus der Oberseite (14) herausragen.

12. Modulplatte nach einem der Ansprüche 1 bis 9, wobei mindestens ein, vorzugsweise metallischer, Verstärkungstreifen in die Oberseite fest und dicht eingefügt ist, dessen Oberseite von außen frei zugänglich ist.

13. Modulplattenverbund (80) mit einer Vielzahl von Modulplatten (10) nach einem der Ansprüche 1 bis 12, wobei die Modulplatten (10) über ihre Verbindungsnasen (22) und Verbindungsaufnahmen (24) flächendeckend, und vorzugsweise wasserdicht, miteinander verbunden sind.

14. Verfahren (V1) zum Herstellen einer flächendeckenden Modulplattenverbunds (80) aus einer Vielzahl von Modulplatten (10) aus Kunststoff, wobei der Modulplattenverbund (80) ausgebildet ist, eine Vielzahl von PV-Modulen sicher auf einem Dach zu tragen und das Dach wasserdicht abzudecken, und wobei jede der Modulplatten (10) vorzugsweise gemäß einem der Ansprüche 1 bis 12 ausgebildet ist, mit folgenden Schritten:
a) Auflegen (S10) einer Modulplatte (10-1) auf das Dach;
b) überlappendes Auflegen (S16) einer weiteren Modulplatte (10-2, 10-3) auf eine bereits verlegte Modulplatte (10-1), so dass eine Oberseite (14) der bereits verlegten Modulplatte (10-1) formschlüssig mit einer Unterseite (16) eines benachbarten Moduls (10-2, 10-3) formschlüssig in Eingriff kommen;
c) Benetzen (S14) zumindest eines Spalts (S) zwischen sich überlappenden Randbereichen (20) der miteinander in Eingriff zu bringenden Modulplatten (10-1, 10-2, 10,3) mit einem Lösungskleber (92), so dass sich zwischen den formschlüssig verbundenen Modulplatten (10-1, 10-2, 10-3) eine wasserdichte stoffschlüssige Verbindung ausbildet; und
d) Wiederholen der Schritte b) und c) bis alle Modulplatten (10) stoffschlüssig miteinander verbunden sind, die zur Erzeugung des flächendeckenden Modulplattenverbunds (80) benötigt werden, der zur Montage von PV-Module eingerichtet ist.

15. Verfahren (V2) zum Herstellen einer Modulplatte (10) nach einem der Ansprüche 1 bis 12, mit folgenden Schritten:
Einlegen (S30) eines warmen Modulplatten-Formlings (98) zwischen eine Matrize (94) und eine Patrize (96);
Schließen (S34) der Patrize (96) und der Matrize (34) unter Druck, um die Modulplatte (10) in ihre Endform durch Tiefziehen oder Pressen umzuformen.

16. Verfahren nach Anspruch 15, wobei zumindest ein, vorzusgweise metallischer, Verstärkungsstreifen (38) zwischen die Matrize (94) und die Patrize (96) gelegt wird.
